# EUROPEAN PATENT SPECIFICATION

(11) **EP 1 016 109 B1**
(45) Date of publication and mention of the grant of the patent: **07.05.2003**
(21) Application number: 98944390.8
(22) Date of filing: 14.09.1998
(51) Int. Cl.: H01H 1/00

(54) **METHOD FOR REQUESTING AND TRANSFERRING INFORMATION IN A DIGITAL AUDIO BROADCASTING SYSTEM**
VERFAHREN ZUR INFORMATIONSABFRAGE UND TRANSFER IN EINEM DIGITALEN RUNDFUNK SYSTEM
PROCEDE DE DEMANDE ET DE TRANSFERT D'INFORMATION DANS UN SYSTEME DE RADIODIFFUSION AUDIONUMERIQUE

(30) Priority: 17.09.1997 SE 9703345
(43) Date of publication of application: 05.07.2000
(60) Divisional application: 03002312.1
(73) Proprietor: Teracom AB, 118 92 Stockholm (SE)
(72) Inventor: REBHAN, Richard, S-113 33 Stockholm (SE); KARLSSON, Pierre, S-147 37 Huddinge (SE); RUOTTINEN, Per, S-115 30 Stockholm (SE); OSSFELDT, Jan, S-135 49 Tyresö (SE); POHJANVUORI, Timo, S-413 14 Göteborg (SE)
(74) Representative: Cederbom, Hans Erik August
(86) International application number: SE9801625
(87) International publication number: WO99014775

(56) References cited:
- WO-A1-97/12452
- US-A- 5 303 393
- US-A- 5 493 709
- US-A- 5 541 980
- IBM TECHNICAL DISCLOSURE BULLETIN, Volume 38, No. 8, August 1995, "Personal Digital Radio Service", pages 315-316.

## Description

### FIELD OF THE INVENTION

The present invention relates generally to a method of information transfer, for example an electronic map, multimedia applications or the like, with one or more radiofrequency receivers such as mobile, portable, and stationary radiofrequency receivers, especially to a single predetermined digital audio broadcasting (DAB) receiver.

### BACKGROUND TO THE INVENTION

There exists a number of different methods of transferring information from an information/content provider to an information consumer, i.e. to the destination where the information/content is intended to be used. In order to transfer information to an information consumer there must be some means for localizing the information consumer, which in some circumstances can be a problem. If the information consumer is stationary then the problem might arise the first time an information transfer is to take place. On the other hand if the information consumer is mobile, then, depending on the method of transfer, the information consumer might have to be localized anew for each information transfer that is to take place. Another problem is how to transfer the information in an effective manner, both from an economic as well as from a time point of view, the information is perhaps no good tomorrow and it must be affordable to get it.

A mobile telephone system is an information transfer system. Voice information in the form of digital information and also possibly pure digital data. A mobile telephone system addresses the previously mentioned problems in a manner intended to be efficient mainly for speech. A mobile telephone system, GSM (Global System for Mobile communication) for example, is a two-way communications system that uses cells in which transfer of information between the mobile telephone and a base station occur. As long as a mobile telephone is powered up (and even when on-hook) an intermittent exchange of information between the mobile phone and the base station of a cell in question takes place. The information exchange that takes place when the mobile phone is on-hook is, among other things, used for keeping track of the mobile phone. The base station in question passes this information on to a central database that the mobile telephone operator maintains to keep track of where all the mobile telephones are located, i.e. in what cell they are for the moment. When a request to establish contact with the mobile phone is made then an inquiry to the central database is made to find out in which cell the mobile phone is located so that the call can be directed to the appropriate base station for a subsequent correct radio communication setup.

A DAB (Digital Audio Broadcast) broadcasting system can have a similar cell structure as a mobile telephone system has, but DAB is a one-way broadcasting system, i.e. there is no way a DAB receiver can communicate with a DAB transmitter within the DAB system. The local DAB transmitter does not know which DAB receivers are tuned in or can receive the transmitter or if any DAB receiver at all can or is receiving for that matter. Transfer of information to a DAB receiver would therefore involve transmitting this information across all cells that the DAB receiver might be located in, which usually means the whole DAB network and possibly over all different frequencies.

A DAB receiver can determine its own location by using the unique TII (Transmitter Identification Information) that each DAB transmitter adds to the DAB frames. This means that a DAB receiver can distinguish locally valid information from information concerning other transmitter regions. This seems to be an improvement in the DAB system, especially in SFNs (Single Frequency Networks) and is described in US 5 493 709. US 5 493 709 describes how local information is transmitted in the complete DAB network to thereby be selectively filtered in the DAB receivers. This method will relieve a listener/user of information which does not concern the area in which the DAB receiver is located at the moment. Unfortunately it could be argued that the described method does not use the DAB broadcasting system in a very effective manner since system bandwidth in the whole system is used for information transfer of information which only has any value in a very limited area.

The desire to selectively listen to specific information has led to dedicated systems as that described in IBM technical disclosure bulletin, Vol. 38, No. 08, August 1995, pages 315-316, "Personal Digital Radio Service". This article describes a point to point bi-directional wireless transmission system by which a subscriber can request, for example, specific music. It could be considered a disadvantage that the system uses requires a point to point bi-directional wireless transmission paths that requires and ties up bandwidth to each subscriber in the system. Further, there is, for example, no suggestion of using a radio broadcasting system to optimize the required system bandwidth for information distribution to a large number of subscribers. The IBM technical disclosure bulletin article gives no suggestion on how to transfer information in a DAB system to a predetermined single DAB receiver without having to download the whole system with the information.

WO 97/12452 describes a system to transfer digital information associated with the analogue sound to a listener, for example a telephone number to a pizza place when there is a commercial for that pizza place. WO 97/12452 gives no suggestion on how to transfer information in a DAB system to a predetermined single DAB receiver without having to download the whole system with the information.

There seems to be no manner in which to transfer information in a DAB system to a predetermined single DAB receiver without having to download the whole system with the information, and especially not how to transfer this information in a secure manner.

### SUMMARY OF THE INVENTION

An object of the invention is to define a method for providing an efficient manner of transferring information via a digital audio broadcasting system to one or more predetermined information consumers.

Another object of the invention is to define a method which is able to transfer information in a digital audio broadcasting system in a safe, error tolerant and efficient manner without downloading more than necessary of the digital audio broadcasting system.

The above-mentioned objects are achieved in accordance with the invention by a method for transferring information from an information provider to an information consumer in a highly efficient manner by means of a digital audio broadcasting (DAB) system and a secondary bi-directional transfer network. The secondary network provides information of where the DAB receiver of the information consumer is located so that only suitable DAB transmitters in the area are used for the information transfer itself. The location is determined by having at least one transmitter identification information (TIT) of one transmitter that the receiver can receive transferred via the secondary network. Thereby only the necessary DAB transmitters needs to be used for the information transfer, thus relieving the rest of the DAB transmitters from an unnecessary downloading.

The aforementioned objects are also achieved according to the invention by a method for transferring information from an information provider to a predetermined information consumer. The information is transferred by means of a digital audio broadcasting system to a digital audio broadcasting receiver of the predetermined information consumer. To enable an efficient information transfer when a demand to transfer information to the predetermined information consumer is originated by the information provider the information transfer is supported by a secondary bi-directional transfer network such as NMT (Nordic Mobile Telephone), GSM (Global System for Mobile telephones), PSTN (Public Switched Telephone Network), Internet, or the like. The method comprises a number of steps. First the information provider establishes contact with an information transfer point for requesting transfer of information to the predetermined information consumer.

The information transfer point can be part of the information provider, part of the DAB system, or a separate service. Thereafter the information transfer point retrieves access information of the predetermined information consumer based on the request from the information provider. As a third step the information transfer point establishes an initial contact with the predetermined information consumer based on the retrieved access information about the predetermined information consumer. Thereafter the predetermined information consumer provides the information transfer point, via the secondary bi-directional transfer network, with transfer configuration information comprising at least one transmitter identification information of a digital audio broadcasting transmitter that the digital audio broadcasting receiver of the predetermined information consumer can receive. Finally the information provider via the information transfer point, based on the transfer configuration information, transfers information over the digital audio broadcasting system to the digital audio broadcasting receiver of the predetermined information consumer to thereby transfer information from the information provider to the predetermined information consumer in an efficient way.

The method advantageously also, based on the transfer configuration information, has the information transfer point transfer the information to the digital audio broadcasting receiver of the predetermined information consumer over a selected transmitter or transmitters in the digital audio broadcasting system.

The access information of the predetermined information consumer preferably provides information of how contact can be made with the predetermined information consumer via the secondary bi-directional transfer network and that the step of establishing an initial contact with the predetermined information consumer is done via the secondary bi-directional transfer network based on the access information of the predetermined information consumer. If the step of establishing initial contact with the predetermined information consumer via the secondary bi-directional transfer network cannot be concluded then preferably a broadcast over the digital audio broadcasting system is performed to alert the predetermined information consumer to establish contact with the information transfer point. If the information transfer point after a timeout has not been able to establish contact with the predetermined information consumer then preferably the information provider is notified that the predetermined information consumer cannot be positively contacted.

The access information of the predetermined information consumer can alternatively advantageously either provide no information on how contact can be made with the predetermined information consumer via the secondary bi-directional transfer network or provide information of how the predetermined information consumer is to be contacted by means of broadcasting over the digital audio broadcasting system to thereby alert the predetermined information consumer to establish contact with the information transfer point and that the step of establishing an initial contact with the predetermined information consumer is done via a broadcast over the digital audio broadcasting system to thereby alert the predetermined information consumer to establish contact with the information transfer point. If the information transfer point after a timeout has not been able to establish contact with the predetermined information consumer then preferably the information provider is notified that the predetermined information consumer cannot be positively contacted.

The transfer configuration information can further advantageously also comprise at least one of either the transmitter identification information of all transmitters receivable by the digital audio broadcasting receiver of the predetermined information consumer, the field strengths of all receivable transmitters, what program if any the digital audio broadcasting transmitter of the predetermined information consumer is currently receiving, or alternative information transfer routes. The information transfer point based on the transfer configuration information can in some embodiments of the invention determine when and with what channel the information transfer is to take place and by means of the secondary bi-directional transfer network notify the predetermined information consumer of when and with what channel the information transfer is to take place.

In some versions of the invention increased security of the information that is to be transferred is of increased concern and these comprise further steps. In a first additional step the information transfer point transfers a crypto key to the predetermined information consumer by means of the secondary bi-directional transfer network before, during or after transferring information over the digital audio broadcasting system. The information to be transferred is encoded either by the information provider or by the information transfer point. Decoding the transferred information is performed by means of the transferred crypto key either in the digital audio broadcasting receiver of the predetermined information consumer or by the predetermined information consumer.

When a high reliability of the transfer of the information is necessary the method according to the invention further comprises the following steps. First transferring checksums or the like, of the information that has or will be transferred via the digital audio broadcasting system, via the secondary bi-directional transfer network to the predetermined information consumer. Secondly checking the transferred information if it is uncorrupted based on the transferred checksums or the like. Checking is performed in the digital audio broadcasting receiver of the predetermined information consumer or by the predetermined information consumer. Thirdly the digital audio broadcasting receiver of the predetermined information consumer or the predetermined information consumer requesting, via the secondary bi-directional transfer network, to the information transfer point a resending of corrupted transferred information.

The aforementioned objects are also achieved by a method for transferring information from an information provider to an information consumer by means of a digital audio broadcasting system to a digital audio broadcasting receiver of the information consumer. The transfer is executed with support of a secondary bi-directional transfer network to thereby enable an efficient information transfer when a demand to transfer information to the information consumer is originated by the information consumer. The method comprises a number of steps. First of all the information consumer establishes an initial contact with an information transfer point via the secondary bi-directional transfer network with a request for an information transfer from the information provider to the information consumer. The information transfer point can be part of the information provider, part of the DAB system, or a separate service. Then the information consumer provides the information transfer point, via the secondary bi-directional transfer network, with transfer configuration information comprising at least one transmitter identification information of a digital audio broadcasting transmitter that the digital audio broadcasting receiver of the information consumer can receive. The information transfer point retrieves the requested information. Thereafter the information provider via the information transfer point, based on the transfer configuration information, transfers information over the digital audio broadcasting system to the digital audio broadcasting receiver of the information consumer to thereby transfer information from the information provider to the information consumer in an efficient way.

The method advantageously also, based on the transfer configuration information, has the information transfer point transfer the information to the digital audio broadcasting receiver of the information consumer over a selected transmitter or transmitters in the digital audio broadcasting system.

The transfer configuration information can further advantageously also comprise at least one of either the transmitter identification information of all transmitters receivable by the digital audio broadcasting receiver of the information consumer, the field strengths of all receivable transmitters, what program if any the digital audio broadcasting transmitter of the information consumer is currently receiving, or alternative information transfer routes. The information transfer point based on the transfer configuration information can in some embodiments of the invention determine when and with what channel the information transfer is to take place and by means of the secondary bi-directional transfer network notify the information consumer of when and with what channel the information transfer is to take place.

The information transfer point can preferably confirm the availability or non-availability of the requested information to the information consumer via the secondary bi-directional transfer network or via the digital audio broadcasting system.

In some versions of the invention increased security of the information that is to be transferred is of increased concern and these comprise further steps. In a first additional step the information transfer point transfers a crypto key to the information consumer by means of the secondary bi-directional transfer network before, during or after transferring information over the digital audio broadcasting system. The information to be transferred is encoded either by the information provider or by the information transfer point. Decoding the transferred information is performed by means of the transferred crypto key either in the digital audio broadcasting receiver of the information consumer or by the information consumer.

When a high reliability of the transfer of the information is necessary the method according to the invention further comprises the following steps. First transferring checksums or the like, of the information that has or will be transferred via the digital audio broadcasting system, via the secondary bi-directional transfer network to the information consumer. Secondly checking the transferred information if it is uncorrupted based on the transferred checksums or the like. Checking is performed in the digital audio broadcasting receiver of the information consumer or by the information consumer. Thirdly the digital audio broadcasting receiver of the information consumer or the information consumer requesting, via the secondary bi-directional transfer network, to the information transfer point a resending of corrupted transferred information.

By providing a method for transferring information from an information provider to an information consumer over only selected parts of a digital audio broadcasting system, a plurality of advantages over prior art systems are obtained. By providing information to an information transfer point of which DAB transmitters is and optionally which can be received then the information transfer can be directed accordingly without having to download the whole system. The information needed by the information transfer point is transferred to it by means of a secondary bi-directional transfer network which can be a readily available telephone network such as GSM. A high security is obtained by transferring crypto keys and the like directly to the information consumer by means of the secondary bi-directional transfer network which in that case preferably is a point to point transfer network.

High reliability is obtained by using the secondary bi-directional transfer network as a back channel for requests for resending faulty blocks of data. By combining a cheap, since the whole system bandwidth is not used, high capacity broadcasting system and a lower capacity or more expensive secondary bi-directional transfer network an efficient manner of transferring information is obtained according to the invention. Another advantage of the invention is the ability to be able to identify an information consumer either by the DAB receiver identity, the identity of the secondary bi-directional transfer network transceiver, another identifier which is hardware independent, or an arbitrary combination of the above.

### DESCRIPTION OF THE FIGURES

The invention will now be described in more detail for explanatory, and in no sense limiting, purposes, with reference to the following figures, in which
- Fig. 1: shows a block diagram of one embodiment of a system according to the invention,
- Fig. 2: shows a flow chart of a method according to the invention,
- Fig. 3: shows a flow chart of another method according to the invention,
- Fig. 4: shows a flow chart of how a high security and error tolerance is accomplished according to one method of the invention.

### DESCRIPTION OF PREFERRED EMBODIMENTS

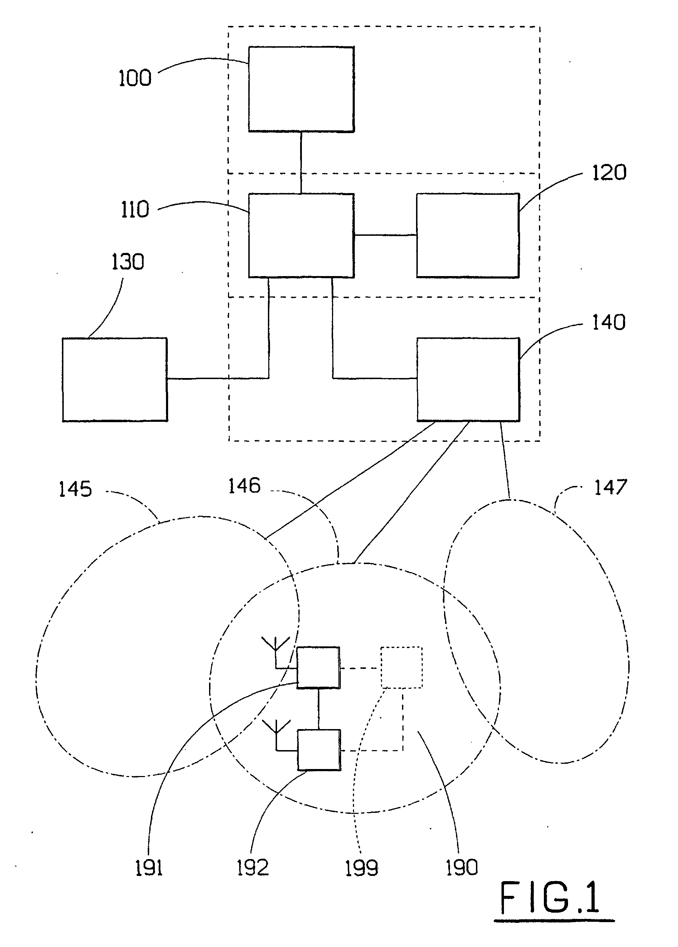

In order to clarify the system according to the invention, some examples of its use will now be described in connection with Figures 1 to 4.

Figure 1 shows a block diagram of one embodiment of a system according to the invention. As indicated in the figure and below certain parts can form smaller or larger groups. The information that is to be transferred to an information consumer / terminal 190 can be found at an information / content provider 100. The other parts that make up the system are an information transfer point / a service provider 110, an access information database 120, a digital audio broadcasting (DAB) network / a network provider 140 with associated cells 145, 146, 147, a secondary bi-directional transfer network / an interaction network 130, an information consumer / terminal 190 with a DAB receiver 191 and a transceiver 192 for the secondary bi-directional transfer network 130 and optionally means 199 for handling encrypted transmission. The access information database 120 is used to identify the secondary network 130 and access in that network to an information consumer. The invention is not dependent on the exact physical closeness of the different parts, logically the information consumer 190 is preferably apart from the other parts 100, 110, 120, 130, 140 of the system. For example the information transfer point 110 might be part of the information provider 100, or form part with the access information database 120 and the DAB network / system 140, or be a completely independent service. As mentioned there are many possibilities, but they do not affect the invention.

Basically the invention locates the information consumer 190 and directs the information only to the whereabouts of the information consumer 190. The invention utilizes a broadcasting system 140 for transfer of information to the information consumer 190. A broadcasting system is very effective in transferring information to many receivers.

Sometimes a broadcasting system is referred to as a point to multi point transfer system. A customary manner to transfer information to a single recipient is to use a so-called point to point transfer system. A common disadvantage with a point to point system is that it is very expensive per unit of transferred information. A very attractive advantage with using a DAB system for transfer of information is its extremely large bandwidth, i.e. it can transfer large amounts of data / information in a very short space of time. By locating a receiver / consumer of information 190 in a broadcasting system 145, 146, 147 the transfer of information can be directed to that locality 146, enabling simultaneous use of the network by spatially separated receivers making the transfer of information very cost effective. A DAB system can be of a SFN (Single Frequency Network) nature, be of a more traditional radio broadcasting nature with different frequency regions / cells 145, 146, 147 or a combination of both where there can be a SFN covering a nation or large region and also several different DAB frequency regions within the same coverage area, each of which can be a small SFN system. It is possible to direct and send different information within a SFN as well as in the traditional cell structure. Sending different information in a SFN requires great care, but is possible. However, both methods require that the locality of the receiver to be known if transmission of information to a single information consumer 190 is to be possible at all.

According to the invention a secondary bi-directional network 130 is used to transfer the information of the locality of the information consumer to the information transfer point 110. One method of acquiring the locality itself of the information consumer would be to use a GPS (Global Positioning System) and send the information to the information transfer point 110 via the secondary network 130. However, it could be seen as a disadvantage at times to have to include a GPS with the information consumer.

Another method of locating the information consumer 190 would be to use the information that a cell based secondary bi-directional transfer network 130, such as GSM, generates. Unfortunately that information is usually the propriety of the operator to that network and thus unavailable to users outside of that network. The use of that method would then be specific to a specific secondary network 130, which could be considered a disadvantage at times.

According to the invention the specific transmitter identification information (TII) that each transmitter in a DAB network sends is used to locate the information consumer 190. At least one TII is acquired and transferred to the information transfer point 110 via the secondary network 130. One is enough to at least roughly locate the information consumer 190 with its DAB receiver 191 and secondary network transceiver 192. Optionally more receivable TIIs are transferred and optionally together with their respective field strengths. This enables the information transfer point 110 to fairly exactly pinpoint the information consumer 190 and thereby determine the most efficient manner in which to transfer the information. Criteria that the information transfer point 110 can use could for example be direction of travel, free capacity in the different channels, the amount of information to transfer, what channels are receivable, urgency / priority of the request to transfer information, and so on.

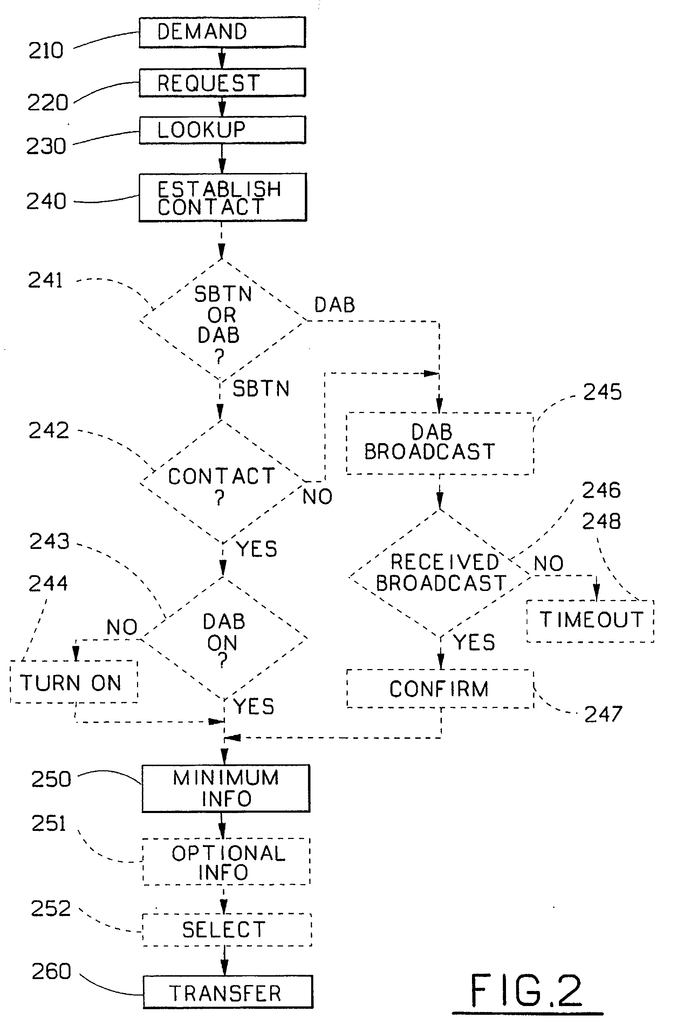

Figure 2 shows a flow chart of a method according to the invention utilizing, for example, a system according to figure 1. The method according to figure 2 describes when a demand for transferring information to an information consumer arises from an information provider, i.e. a push system. In a first step, a demand step 210, a demand to transfer information to an information consumer originates at an information provider. This demand is transferred as a request to an information transfer point in a request step 220. The information transfer point executes a lookup in a lookup step 230 to establish the known methods of establishing contact with the information consumer.

Based on the lookup in an establish contact step 240, contact with the information consumer is established. The step of establishing contact 240 can optionally involve the following substeps. Substep SBTN or DAB ? 241 establishes if the initial contact with the information consumer is to be done via the secondary bi-directional transfer network (SBTN) or via the digital audio broadcasting network (DAB). This information is usually available and established in the lookup step 230. If the secondary network is to be used then a substep contact ? 242 determines if it is possible to establish contact with the information consumer. If it is possible to establish contact with the information consumer, then in substeps DAB on ? 243 and turn on 244 it is made sure that the DAB receiver of the information consumer is turned on whereafter the procedure continues with step minimum info 250. If no contact was possible to establish in substep contact ? 242 due to, for example, the fact that the secondary network transceiver of the information consumer is turned off or the information transfer point has no or erroneous information about the secondary network of the information consumer, then one method to continue is to go to substep DAB broadcast 245. In the substep DAB broadcast 245 a general call is made via part or the complete DAB network to alert the information consumer that a demand to transfer information has arisen. If the general call is received by the information consumer in a substep received broadcast 246 then the information consumer should turn on its secondary network transceiver and confirm to the information transfer point in a substep confirm 247 that it has received the call and continues with step minimum info 250. On the other hand if the information transfer point does not receive a confirmation or any other contact with the information consumer within a predetermined space of time then in a substep timeout 248 the information provider is notified that no contact was possible to reach with the information consumer.

After initial contact has been made with the information consumer then in the step minimum info 250 the information consumer transfers to the information transfer point via the secondary network transfer configuration information comprising at least one transmitter identification information (TII) that the DAB receiver of the information consumer can receive. Optionally in a substep optional info 251 the information consumer also provides the information transfer point with additional transfer configuration information such as additional receivable TIIs, field strengths of received transmitters, optional transfer routes etc. Also optionally in a substep select 252 the information transfer point determines / selects an optimal route / channel to send the information. Finally in a transfer step 260 the information is transferred from the information provider to the information consumer via the digital audio broadcasting network.

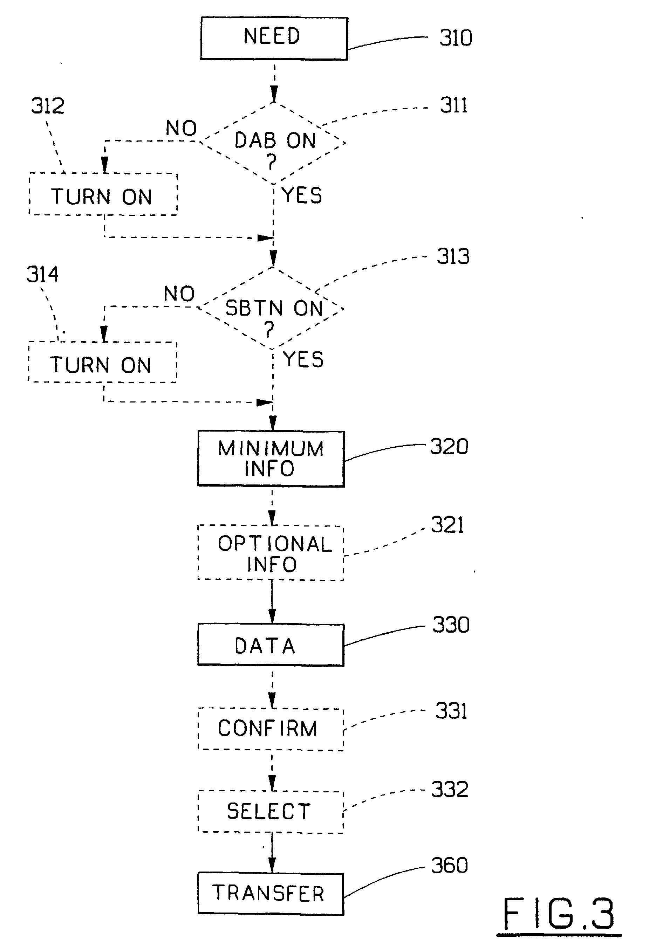

Figure 3 shows a flow chart of another method according to the invention utilizing, for example, a system according to figure 1. The method according to figure 3 describes when a demand for transferring information to an information consumer arises from the information consumer, i.e. a pull system. In a first step, a need step 310, a need for a transfer of information to the information consumer originates in the information consumer itself.

In the optional substeps DAB on ? 311, turn on 312, SBTN on ? 313, and turn on 314 the information consumer makes sure that the necessary equipment is turned on. The information consumer then in the step minimum info 320 makes an initial contact with and also transfers to the information transfer point via the secondary network the request for information and transfer configuration information comprising at least one transmitter identification information (TII) that the DAB receiver of the information consumer can receive. Optionally in a substep optional info 321 the information consumer also provides the information transfer point with additional transfer configuration information such as additional receivable TIIs, field strengths of received transmitters, optional transfer routes etc. In a data step 330 the information transfer point retreives the requested information from an information provider. Optionally in a substep confirmation 331 the information transfer point confirms to the information consumer if the requested information is available or not. Also optionally in a substep select 332 the information transfer point determines / selects an optimal route / channel to send the information. Finally in a transfer step 360 the information is transferred from the information provider to the information consumer via the digital audio broadcasting network.

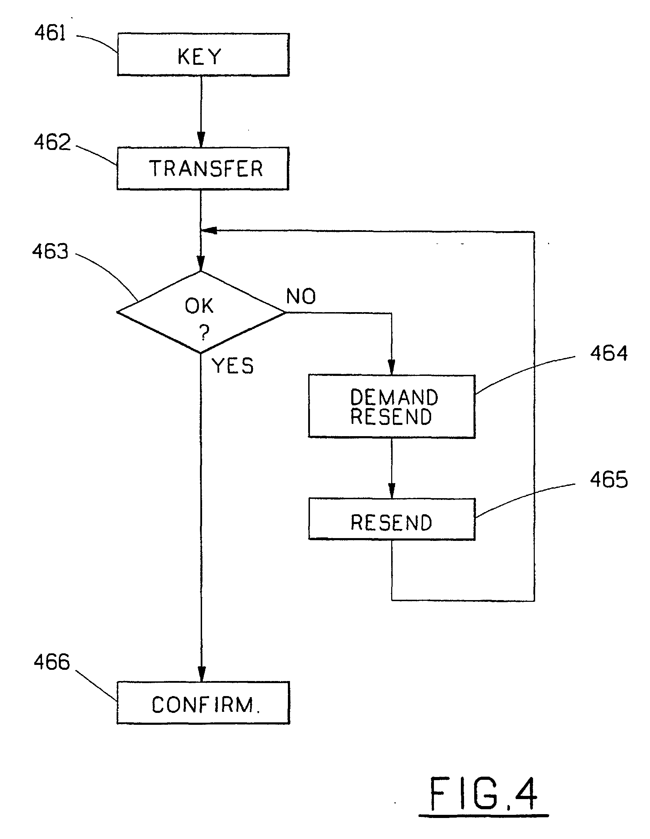

Figure 4 shows a flow chart of how a high security and error tolerance is accomplished according to one method of the invention which can be implemented in the methods of figure 2 and 3 as substeps to the transfer steps 260 and 360 respectively. In a first step key 461 a crypto key or the like is transferred to the information consumer via the secondary network. In a second step transfer 462 encoded information is transferred to the information consumer via DAB. The information is decoded / decrypted and a test is made in a step OK ? 463 to determine if the information was received intact. If it was received without any errors then in a step confirmation 466 the information consumer confirms, via the secondary network, the reception of the information to the information transfer point. On the other hand if there is an error in the received information then the information consumer in a step demand resend 464 makes a demand, via the secondary network, to the information transfer point to resend the faulty information. The information is resent in a step resend 465 over the DAB network after which the procedure proceeds with step OK ? 463.

The present invention can be put into apparatus-form either as pure hardware, as pure software or as a combination of hardware and software. If the method according to the invention is realised in the form of software, it can be completely independent or it can be one part of a larger program. The software can suitably be located in a general purpose computer or in a dedicated computer.

As a summary, the invention can basically be described as a method which provide an efficient manner of transferring information to an information consumer within a DAB network using a secondary bi-directional transfer network.

The invention is not limited to the embodiments described above but may be varied within the scope of the appended patent claims.

### FIG 1

- 100: requester / information provider
- 110: information transfer point
- 120: database
- 130: secondary bi-directional transfer network SBTN
- 140: DAB - Network provider
- 145: cell 1
- 146: cell 2
- 147: cell 3
- 190: user
- 191: DAB receiver
- 192: SBTN transceiver
- 199: crypto

### FIG 2

- 210: demand - for transfer of info to info consumer IC
- 220: request - to information transfer point ITP
- 230: lookup - of secondary bidir transfer netork SBTN
- 240: establish contact - with info IC based on lookup
- 241: SBTN or DAB ? - no SBTN given then DAB broadcast
- 242: contact ? - with / via SBTN
- 243: DAB on ?
- 244: turn on - if not
- 245: DAB broadcast
- 246: received broadcast ?
- 247: confirm - if received
- 248: timeout - and notify demander
- 250: minimum info - TII
- 251: optional info - field strength, xtra TII ....

- 252: select - method / DAB channel of transfer
- 260: transfer - info to information consumer

### FIG 3

- 310: need - of the information consumer
- 311: DAB on ?
- 312: turn on - if not
- 313: SBTN on ?
- 314: turn on - if not
- 320: minimum info - TII and request for information
- 321: optional info - field strength, what program ....
- 330: data - is retrieved int. or ext. to ITP
- 331: confirmation - to IC that data is available
- 332: select - method / DAB channel of transfer ...
- 360: transfer - info to IC

### FIG 4

- 461: key - to crypto sent via SBTN to DAB / IC
- 462: transfer - encoded blocks via DAB
- 463: OK ?
- 464: demand resend - of blocks that were not OK
- 465: resend - blocks
- 466: confirmation - to ITP that all OK

## Claims

1. A method for transferring information from an information provider to a predetermined information consumer by means of a digital audio broadcasting system to a digital audio broadcasting receiver of the predetermined information consumer and by means of support of a secondary bi-directional transfer network to thereby enable an efficient information transfer when a demand (210) to transfer information to the predetermined information consumer is originated by the information provider, **characterized in that** the method comprises the following steps:
- the information provider establishing contact with an information transfer point for requesting (220) transfer of information to the predetermined information consumer;
- the information transfer point retrieving (230) access information of the predetermined information consumer based on the request from the information provider;
- the information transfer point establishing (240) an initial contact with the predetermined information consumer based on the retrieved access information about the predetermined information consumer;
- the predetermined information consumer providing (250) the information transfer point, via the secondary bi-directional transfer network, with transfer configuration information comprising at least one transmitter identification information of a digital audio broadcasting transmitter that the digital audio broadcasting receiver of the predetermined information consumer can receive;
- the information provider via the information transfer point, based on the transfer configuration information, transferring (260) information over the digital audio broadcasting system to the digital audio broadcasting receiver of the predetermined information consumer to thereby transfer information from the information provider to the predetermined information consumer in an efficient way.

2. The method according to claim 1, **characterized in that** based on the transfer configuration information the information transfer point can transfer the information to the digital audio broadcasting receiver of the predetermined information consumer over a selected transmitter or transmitters in the digital audio broadcasting system.

3. The method according to claim 1 or 2, **characterized in that** the access information of the predetermined information consumer provides information of how contact can be made with the predetermined information consumer via the secondary bi-directional transfer network and that the step of establishing an initial contact with the predetermined information consumer is done via the secondary bi-directional transfer network based on the access information of the predetermined information consumer.

4. The method according to claim 3, **characterized in that** if the step of establishing initial contact with the predetermined information consumer via the secondary bi-directional transfer network cannot be concluded then a broadcast over the digital audio broadcasting system is performed to alert the predetermined information consumer to establish contact with the information transfer point.

5. The method according to claim 4, **characterized in that** if the information transfer point after a timeout has not been able to establish contact with the predetermined information consumer then the information provider is notified that the predetermined information consumer cannot be positively contacted.

6. The method according to claim 1 or 2, **characterized in that** the access information of the predetermined information consumer either provides no information on how contact can be made with the predetermined information consumer via the secondary bi-directional transfer network or the access information provides information of how the predetermined information consumer is to be contacted by means of broadcasting over the digital audio broadcasting system to thereby alert the predetermined information consumer to establish contact with the information transfer point and that the step of establishing an initial contact with the predetermined information consumer is done via a broadcast over the digital audio broadcasting system to thereby alert the predetermined information consumer to establish contact with the information transfer point.

7. The method according to claim 6, **characterized in that** if the information transfer point after a timeout has not been able to establish contact with the predetermined information consumer then the information provider is notified that the predetermined information consumer cannot be positively contacted.

8. The method according to any one of claims 1 to 7,
**characterized in that** the transfer configuration information further also comprises at least one of either the transmitter identification information of all transmitters receivable by the digital audio broadcasting receiver of the predetermined information consumer, the field strengths of all receivable transmitters, what program if any the digital audio broadcasting transmitter of the predetermined information consumer is currently receiving, or alternative information transfer routes.

9. The method according to any one of claims 1 to 8,
**characterized in that** the information transfer point based on the transfer configuration information determines when and with what channel the information transfer is to take place and by means of the secondary bi-directional transfer network notifies the predetermined information consumer of when and with what channel the information transfer is to take place.

10. The method according to any one of claims 1 to 9,
**characterized in that** the method further comprises the following steps:
- the information transfer point transferring a crypto key to the predetermined information consumer by means of the secondary bi-directional transfer network before, during or after transferring information over the digital audio broadcasting system;
- encoding the information to be transferred either by the information provider or by the information transfer point;
- decoding by means of the transferred crypto key the transferred information either in the digital audio broadcasting receiver of the predetermined information consumer or by the predetermined information consumer.

11. The method according to any one of claims 1 to 10,
**characterized in that** the method further comprises the following steps:
- transferring checksums or the like, of the information that has or will be transferred via the digital audio broadcasting system, via the secondary bi-directional transfer network to the predetermined information consumer;
- checking the transferred information if it is uncorrupted based on the transferred checksums or the like, checking in the digital audio broadcasting receiver of the predetermined information consumer or by the predetermined information consumer;
- the digital audio broadcasting receiver of the predetermined information consumer or the predetermined information consumer requesting, via the secondary bi-directional transfer network, to the information transfer point a resending of corrupted transferred information.

12. A method for transferring information from an information provider to an information consumer by means of a digital audio broadcasting system to a digital audio broadcasting receiver of the information consumer and by means of support of a secondary bi-directional transfer network to thereby enable an efficient information transfer when a demand (310) to transfer information to the information consumer is originated by the information consumer, **characterized in that** the method comprises the following steps:
- the information consumer establishing (320) an initial contact with an information transfer point via the secondary bi-directional transfer network with a request for an information transfer from the information provider to the information consumer;
- the information consumer providing (320) the information transfer point, via the secondary bi-directional transfer network, with transfer configuration information comprising at least one transmitter identification information of a digital audio broadcasting transmitter that the digital audio broadcasting receiver of the information consumer can receive;
- the information transfer point retrieving (330) the requested information;
- the information provider via the information transfer point, based on the transfer configuration information, transferring (360) information over the digital audio broadcasting system to the digital audio broadcasting receiver of the information consumer to thereby transfer information from the information provider to the information consumer in an efficient way.

13. The method according to claim 12, **characterized in that** based on the transfer configuration information the information transfer point can transfer the information to the digital audio broadcasting receiver of the information consumer over a selected transmitter or transmitters in the digital audio broadcasting system.

14. The method according to claim 12 or 13,
**characterized in that** the transfer configuration information further also comprises at least one of either the transmitter identification information of all transmitters receivable by the digital audio broadcasting receiver of the information consumer, the field strengths of all receivable transmitters, what program if any the digital audio broadcasting transmitter of the information consumer is currently receiving, or alternative information transfer routes.

15. The method according to any one of claims 12 to 14,
**characterized in that** the information transfer point based on the transfer configuration information determines when and with what channel the information transfer is to take place and by means of the secondary bi-directional transfer network notifies the information consumer of when and with what channel the information transfer is to take place.

16. The method according to any one of claims 12 to 15,
**characterized in that** the information transfer point confirms the availability or non-availability of the requested information to the information consumer via the secondary bi-directional transfer network or via the digital audio broadcasting system.

17. The method according to any one of claims 12 to 16,
**characterized in that** the method further comprises the following steps:
- the information transfer point transferring a crypto key to the information consumer by means of the secondary bi-directional transfer network before, during or after transferring information over the digital audio broadcasting system;
- encoding the information to be transferred either by the information provider or by the information transfer point;
- decoding by means of the transferred crypto key the transferred information either in the digital audio broadcasting receiver of the information consumer or by the information consumer.

18. The method according to any one of claims 12 to 17,
**characterized in that** the method further comprises the following steps:
- transferring checksums or the like, of the information that has or will be transferred via the digital audio broadcasting system, via the secondary bi-directional transfer network to the information consumer;
- checking the transferred information if it is uncorrupted, based on the transferred checksums or the like, checking in the digital audio broadcasting receiver of the information consumer or by the information consumer;
- the digital audio broadcasting receiver of the information consumer or the information consumer requesting, via the secondary bi-directional transfer network, to the information transfer point a resending of corrupted transferred information.

## Patentansprüche

1. Verfahren zum Übertragen von Information von einem Informationslieferanten zu einem vorbestimmten Informationskonsumenten mittels eines Systems für digitalen Hörfunk für einen Empfänger für digitalen Hörfunk des vorbestimmten Informationskonsumenten und mittels Unterstützung von einem sekundären bidirektionalen Übertragungsnetz, um dadurch eine effiziente Informationsübertragung zu ermöglichen, wenn eine Aufforderung (210), Information zu dem vorbestimmten Informationskonsumenten zu übertragen, von dem Informationslieferanten ausgeht,
**dadurch gekennzeichnet,**
**dass** das Verfahren die folgenden Schritte umfasst, dass:
- der Informationslieferant einen Kontakt mit einem Informationsübertragungspunkt zur Anforderung (220) einer Übertragung von Information zu dem vorbestimmten Informationskonsumenten herstellt;
- der Informationsübertragungspunkt Zugangsinformation des vorbestimmten Informationskonsumenten auf der Grundlage der Anforderung von dem Informationslieferanten heraussucht (230);
- der Informationsübertragungspunkt einen Anfangskontakt mit dem vorbestimmten Informationskonsumenten auf der Grundlage der herausgesuchten Zugangsinformation über den vorbestimmten Informationskonsumenten herstellt (240);
- der vorbestimmte Informationskonsument den Informationsübertragungspunkt über das sekundäre bidirektionale Übertragungsnetz mit Übertragungskonfigurationsinformation beliefert (250), die mindestens eine Senderkennungsinformation des Senders für digitalen Hörfunk umfasst, den der Empfänger für digitalen Hörfunk des vorbestimmten Informationskonsumenten empfangen kann;
- der Informationslieferant über den Informationsübertragungspunkt auf der Grundlage der Übertragungskonfigurationsinformation Information über das System für digitalen Hörfunk zu dem Empfänger für digitalen Hörfunk des vorbestimmten Informationskonsumenten überträgt (260), um dadurch Information von dem Informationslieferanten zu dem vorbestimmten Informationskonsumenten auf eine effiziente Weise zu übertragen.

2. Verfahren nach Anspruch 1
**dadurch gekennzeichnet,**
**dass** der Informationsübertragungspunkt die Information auf der Grundlage der Übertragungskonfigurationsinformation zu dem Empfänger für digitalen Hörfunk des vorbestimmten Informationskonsumenten über einen ausgewählten Sender oder ausgewählte Sender in dem System für digitalen Hörfunk übertragen kann.

3. Verfahren nach Anspruch 1 oder 2,
**dadurch gekennzeichnet,**
**dass** die Zugangsinformation des vorbestimmten Informationskonsumenten Information darüber liefert, wie ein Kontakt mit dem vorbestimmten Informationskonsumenten über das sekundäre bidirektionale Übertragungsnetz hergestellt werden kann, und dass der Schritt des Herstellens eines Anfangskontaktes mit dem vorbestimmten Informationskonsumenten über das sekundäre bidirektionale Übertragungsnetz auf der Grundlage der Zugangsinformation des vorbestimmten Informationskonsumenten vorgenommen wird.

4. Verfahren nach Anspruch 3,
**dadurch gekennzeichnet,**
**dass**, wenn der Schritt des Herstellens eines Anfangskontaktes mit dem vorbestimmten Informationskonsumenten über das sekundäre bidirektionale Übertragungsnetz nicht abgeschlossen werden kann, dann eine Sendung über das System für digitalen Hörfunk durchgeführt wird, um den vorbestimmten Informationskonsumenten zu alarmieren, einen Kontakt mit dem Informationsübertragungspunkt herzustellen.

5. Verfahren nach Anspruch 4,
**dadurch gekennzeichnet,**
**dass**, wenn der Informationsübertragungspunkt nach einer Zeitbegrenzung nicht in der Lage gewesen ist, einen Kontakt mit dem vorbestimmten Informationskonsumenten herzustellen, dann der Informationslieferant benachrichtigt wird, dass mit dem vorbestimmten Informationskonsumenten nicht positiv in Kontakt getreten werden konnte.

6. Verfahren nach Anspruch 1 oder 2,
**dadurch gekennzeichnet,**
**dass** die Zugangsinformation des vorbestimmten Informationskonsumenten entweder keine Information darüber liefert, wie ein Kontakt mit dem vorbestimmten Informationskonsumenten über das sekundäre bidirektionale Übertragungsnetz hergestellt werden kann, oder die Zugangsinformation Information darüber liefert, wie mit dem vorbestimmten Informationskonsumenten mittels einer Sendung über das System für digitalen Hörfunk in Kontakt getreten werden kann, um dadurch den vorbestimmten Informationskonsumenten zu alarmieren, einen Kontakt mit dem Informationsübertragungspunkt herzustellen, und dass der Schritt des Herstellens eines Anfangskontaktes mit dem vorbestimmten Informationskonsumenten über eine Sendung über das System für digitalen Hörfunk vorgenommen wird, um dadurch den vorbestimmten Informationskonsumenten zu alarmieren, einen Kontakt mit dem Informationsübertragungspunkt herzustellen.

7. Verfahren nach Anspruch 6,
**dadurch gekennzeichnet,**
**dass**, wenn der Informationsübertragungspunk nach einer Zeitbegrenzung nicht in der Lage gewesen ist, einen Kontakt mit dem vorbestimmten Informationskonsumenten herzustellen, dann der Informationslieferant benachrichtigt wird, dass mit dem vorbestimmten Informationskonsumenten nicht positiv in Kontakt getreten werden konnte.

8. Verfahren nach einem der Ansprüche 1 bis 7,
**dadurch gekennzeichnet,**
**dass** die Übertragungskonfigurationsinformation ferner auch mindestens eines umfasst von entweder der Senderkennungsinformation aller Sender, die von dem Empfänger für digitalen Hörfunk des vorbestimmten Informationskonsumenten empfangbar sind, die Feldstärken aller empfangbaren Sender, welches Programm, falls überhaupt, der Sender für digitalen Hörfunk des vorbestimmten Informationskonsumenten gegenwärtig empfängt, oder alternative Informationsübertragungsrouten.

9. Verfahren nach einem der Ansprüche 1 bis 8,
**dadurch gekennzeichnet,**
**dass** der Informationsübertragungspunkt auf der Grundlage der Übertragungskonfigurationsinformation bestimmt, wann und mit welchem Kanal die Informationsübertragung stattfinden soll, und mittels des sekundären bidirektionalen Übertragungsnetzes den vorbestimmten Informationskonsumenten benachrichtigt, wann und mit welchem Kanal die Informationsübertragung stattfinden soll.

10. Verfahren nach einem der Ansprüche 1 bis 9,
**dadurch gekennzeichnet,**
**dass** das Verfahren ferner die folgenden Schritte umfasst, dass:
- der Informationsübertragungspunkt einen Kryptographieschlüssel zu dem vorbestimmten Informationskonsumenten mittels des sekundären bidirektionalen Übertragungsnetzes vor, während oder nach der Übertragung von Information über das System für digitalen Hörfunk überträgt;
- die zu übertragende Information entweder durch den Informationslieferanten oder durch den Informationsübertragungspunkt codiert wird;
- die übertragene Information mittels des übertragenen Kryptographieschlüssels entweder in dem Empfänger für digitalen Hörfunk des vorbestimmten Informationskonsumenten oder durch den vorbestimmten Informationskonsumenten decodiert wird.

11. Verfahren nach einem der Ansprüche 1 bis 10,
**dadurch gekennzeichnet,**
**dass** das Verfahren ferner die folgenden Schritte umfasst, dass:
- Prüfsummen oder dergleichen der Information, die über das System für digitalen Hörfunk übertragen worden ist oder wird, über das sekundäre bidirektionale Übertragungsnetz zu dem vorbestimmten Informatipnskonsumenten übertragen werden;
- die übertragene Information auf der Grundlage der übertragenen Prüfsummen oder dergleichen daraufhin geprüft wird, ob sie fehlerfrei ist, wobei die Prüfung in dem Empfänger für digitalen Hörfunk des vorbestimmten Informationskonsumenten oder durch den vorbestimmten Informationskonsumenten erfolgt;
- der Empfänger für digitalen Hörfunk des vorbestimmten Informationskonsumenten oder der vorbestimmte Informationskonsument über das sekundäre bidirektionale Übertragungsnetz eine Anforderung an den Informationsübertragungspunkt richtet, eine fehlerhaft übertragene Information erneut zu senden.

12. Verfahren zum Übertragen von Information von einem Informationslieferanten zu einem Informationskonsumenten mittels eines Systems für digitalen Hörfunk zu einem Empfänger für digitalen Hörfunk des Informationskonsumenten und mittels Unterstützung von einem sekundären bidirektionalen Übertragungsnetz, um dadurch eine effiziente Informationsübertragung zu ermöglichen, wenn eine Aufforderung (310), Information zu dem Informationskonsumenten zu übertragen, von dem Informationskonsumenten ausgeht,
**dadurch gekennzeichnet,**
**dass** das Verfahren die folgenden Schritte umfasst, dass:
- der Informationskonsument einen Anfangskontakt mit einem Informationsübertragungspunkt über das sekundäre bidirektionale Übertragungsnetz mit einer Anforderung für eine Informationsübertragung von dem Informationslieferanten zu dem Informationskonsumenten herstellt (320);
- der Informationskonsument den Informationsübertragungspunkt über das sekundäre bidirektionale Übertragungsnetz mit Übertragungskonfigurationsinformation beliefert (320), die mindestens eine Senderkennungsinformation eines Senders für digitalen Hörfunk umfasst, den der Empfänger für digitalen Hörfunk des Informationskonsumenten empfangen kann;
- der Informationsübertragungspunkt die angeforderte Information heraussucht (330);
- der Informationslieferant über den Informationsübertragungspunkt auf der Grundlage der Übertragungskonfigurationsinformation Information über das System für digitalen Hörfunk zu dem Empfänger für digitalen Hörfunk des Informationskonsumenten überträgt (360), um dadurch Information von dem Informationslieferanten zu dem Informationskonsumenten auf eine effiziente Weise zu übertragen.

13. Verfahren nach Anspruch 12,
**dadurch gekennzeichnet,**
**dass** der Informationsübertragungspunkt die Information auf der Grundlage der Übertragungskonfigurationsinformation zu dem Empfänger für digitalen Hörfunk des Informationskonsumenten über einen ausgewählten Sender oder ausgewählte Sender in dem System für digitalen Hörfunk übertragen kann.

14. Verfahren nach Anspruch 12 oder 13,
**dadurch gekennzeichnet,**
**dass** die Übertragungskonfigurationsinformation ferner auch mindestens eines umfasst von entweder der Senderkennungsinformation aller Sender, die von dem Empfänger für digitalen Hörfunk des Informationskonsumenten empfangbar sind, den Feldstärken aller empfangbaren Sender, welches Programm, wenn überhaupt, der Sender für digitalen Hörfunk des Informationskonsumenten gegenwärtig empfängt, oder alternativen Informationsübertragungsrouten.

15. Verfahren nach einem der Ansprüche 12 bis 14,
**dadurch gekennzeichnet**
**dass** der Informationsübertragungspunkt auf der Grundlage der Übertragungskonfigurationsinformation bestimmt, wann und mit welchem Kanal die Informationsübertragung stattfinden soll, und mittels des sekundären bidirektionalen Übertragungsnetzes den Informationskonsumenten benachrichtigt, wann und mit welchem Kanal die Informationsübertragung stattfinden soll.

16. Verfahren nach einem der Ansprüche 12 bis 15,
**dadurch gekennzeichnet,**
**dass** der Informationsübertragungspunkt die Verfügbarkeit oder Nichtverfügbarkeit der angeforderten Information dem Informationskonsumenten über das sekundäre bidirektionale Übertragungsnetz oder über das System für digitalen Hörfunk bestätigt.

17. Verfahren nach einem der Ansprüche 12 bis 16,
**dadurch gekennzeichnet,**
**dass** das Verfahren ferner die folgenden Schritte umfasst, dass:
- der Informationsübertragungspunkt einen Kryptographieschlüssel zu dem Informationskonsumenten mittels des sekundären bidirektionalen Übertragungsnetzes vor, während oder nach der Übertragung von Information über das System für digitalen Hörfunk überträgt;
- die zu übertragende Information entweder durch den Informationslieferanten oder durch den Informationsübertragungspunkt codiert wird;
- mittels des übertragenen Kryptographieschlüssels die übertragene Information entweder in dem Empfänger für digitalen Hörfunk des Informationskonsumenten oder durch den Informationskonsumenten decodiert wird.

18. Verfahren nach einem der Ansprüche 12 bis 17,
**dadurch gekennzeichnet,**
**dass** das Verfahren ferner die folgenden Schritte umfasst, dass:
- Prüfsummen oder dergleichen der Information, die über das System für digitalen Hörfunk übertragen worden ist oder wird, über das sekundäre bidirektionale Übertragungsnetz zu dem Informationskonsumenten übertragen werden;
- die übertragene Information auf der Grundlage der übertragenen Prüfsummen oder dergleichen daraufhin geprüft wird, ob sie fehlerfrei ist, wobei die Prüfung in dem Empfänger für digitalen Hörfunk des Informationskonsumenten oder durch den Informationskonsumenten erfolgt;
- der Empfänger für digitalen Hörfunk des Informationskonsumenten oder der Informationskonsument über das sekundäre bidirektionale Übertragungsnetz eine Anforderung an den Informationsübertragungspunkt stellt, fehlerhaft übertragene Information erneut zu senden.

## Revendications

1. Procédé destiné au transfert d'informations à partir d'un fournisseur d'informations vers un consommateur d'informations prédéterminé au moyen d'un système de diffusion audio numérique vers un récepteur de diffusion audio numérique du consommateur d'informations prédéterminé et au moyen de la prise en charge par un réseau de transfert bidirectionnel secondaire afin de rendre possible de cette façon un transfert d'informations efficace lorsqu'une demande (210) de transférer des informations vers le consommateur d'informations prédéterminé est amorcée par le fournisseur d'informations, **caractérisé en ce que** le procédé comprend les étapes suivantes :
- établissement par le fournisseur d'informations d'un contact avec un point de transfert d'informations pour demander (220) un transfert des informations au consommateur d'informations prédéterminé ;
- extraction (230) par le point de transfert d'informations des informations d'accès du consommateur d'informations prédéterminé sur la base de la demande en provenance du fournisseur d'informations ;
- établissement (240) par le point de transfert d'informations d'un contact initial avec le consommateur d'informations prédéterminé sur la base des informations d'accès extraites au sujet du consommateur d'informations prédéterminé ;
- fourniture (250) par le consommateur d'informations prédéterminé, au point de transfert d'informations, par l'intermédiaire du réseau de transfert bidirectionnel secondaire, des informations de configuration de transfert comprenant au moins une information d'identification d'émetteur d'un émetteur de diffusion audio numérique que peut recevoir le récepteur de diffusion audio numérique du consommateur d'informations prédéterminé ;
- transfert par un moyen efficace (260) par le fournisseur d'informations, par l'intermédiaire du point de transfert d'informations, et sur la base des informations de configuration de transfert, d'informations au moyen du système de diffusion audio numérique vers le récepteur de diffusion audio numérique du consommateur d'informations prédéterminé afin de transférer de cette façon des informations à partir du fournisseur d'informations vers le consommateur d'informations prédéterminé.

2. Procédé selon la revendication 1, **caractérisé en ce que**, sur la base des informations de configuration de transfert, le point de transfert d'informations peut transférer les informations au récepteur de diffusion audio numérique du consommateur d'informations prédéterminé au moyen d'un émetteur sélectionné ou d'émetteurs à l'intérieur d'un système de diffusion audio numérique.

3. Procédé selon les revendications 1 ou 2,
**caractérisé en ce que** les informations d'accès du consommateur d'informations prédéterminé fournissent des informations sur la manière dont un contact peut être établi avec le consommateur d'informations prédéterminé par l'intermédiaire du réseau de transfert bidirectionnel secondaire et **en ce que** l'étape d'établissement d'un contact initial avec le consommateur d'informations prédéterminé est réalisée par l'intermédiaire du réseau de transfert bidirectionnel secondaire sur la base des informations d'accès du consommateur d'informations prédéterminé.

4. Procédé selon la revendication 3, **caractérisé en ce que**, si l'étape d'établissement de contact initial avec le consommateur d'informations prédéterminé par l'intermédiaire du réseau de transfert bidirectionnel secondaire ne peut pas se conclure, alors une diffusion sur le système de diffusion audio numérique est réalisée pour alerter le consommateur d'informations prédéterminé afin d'établir un contact avec le point de transfert d'informations.

5. Procédé selon la revendication 4, **caractérisé en ce que**, si le point de transfert d'informations n'a pas été à même d'établir un contact après un temps imparti avec le consommateur d'informations prédéterminé, alors le fournisseur d'informations reçoit une notification que le consommateur d'informations prédéterminé ne peut pas être contacté de façon positive.

6. Procédé selon les revendications 1 ou 2,
**caractérisé en ce que** les informations d'accès du consommateur d'informations prédéterminé soit ne fournissent aucune information sur la manière dont un contact peut être établi avec le consommateur d'informations prédéterminé par l'intermédiaire du réseau de transfert bidirectionnel secondaire, soit les informations d'accès fournissent des informations sur la manière dont le consommateur d'informations prédéterminé doit être contacté au moyen d'une diffusion sur le système de diffusion audio numérique pour alerter de cette façon le consommateur d'informations prédéterminé dans le but d'établir un contact avec le point de transfert d'informations et **en ce que** l'étape d'établissement d'un contact initial avec le consommateur d'informations prédéterminé est réalisée par l'intermédiaire d'une diffusion sur le système de diffusion audio numérique pour alerter de cette façon le consommateur d'informations prédéterminé dans le but d'établir un contact avec le point de transfert d'informations.

7. Procédé selon la revendication 6, **caractérisé en ce que**, si le point de transfert d'informations n'a pas été à même d'établir un contact après un temps,imparti avec le consommateur d'informations prédéterminé, alors le fournisseur d'informations reçoit une notification que le consommateur d'informations prédéterminé ne peut pas être contacté de façon positive.

8. Procédé selon l'une quelconque des revendications 1 à 7, **caractérisé en ce que** les informations de configuration de transfert comprennent également en outre au moins l'un des éléments suivants : des informations d'identification d'émetteur de tous les émetteurs pouvant être reçus par le récepteur de diffusion audio numérique du consommateur d'informations prédéterminé, les forces de champ de tous les émetteurs pouvant être reçus, le programme éventuel que l'émetteur de diffusion audio numérique d'un consommateur d'informations prédéterminé est en cours de traiter, ou des routes de remplacement de transfert d'informations.

9. Procédé selon l'une quelconque des revendications 1 à 8, **caractérisé en ce que** le point de transfert d'informations détermine, sur la base des informations de configuration de transfert, quand et avec quel canal le transfert d'informations doit avoir lieu, et envoie une notification au moyen du réseau de transfert bidirectionnel secondaire au consommateur d'informations prédéterminé, au sujet de quand et grâce à quel canal le transfert d'informations doit avoir lieu.

10. Procédé selon l'une quelconque des revendications 1 à 9, **caractérisé en ce que** le procédé comprend de plus les étapes suivantes :
- transfert par le point de transfert d'informations d'une clé de cryptage au consommateur d'informations prédéterminé au moyen du réseau de transfert bidirectionnel avant, pendant ou après le transfert d'informations sur le système de diffusion audio numérique ;
- codage des informations devant être transférées soit par le fournisseur d'informations soit par le point de transfert d'informations ;
- décodage au moyen de la clé de cryptage transférée des informations transférées soit à l'intérieur du récepteur de diffusion audio numérique du consommateur d'informations prédéterminé soit par le consommateur d'informations prédéterminé.

11. Procédé selon l'une quelconque des revendications 1 à 10, **caractérisé en ce que** le procédé comprend de plus les étapes suivantes :
- transfert de sommes de contrôle ou similaire des informations qui ont été ou qui vont être transférées par l'intermédiaire du système de diffusion audio numérique, par l'intermédiaire du réseau de transfert bidirectionnel secondaire vers le consommateur d'informations prédéterminé ;
- vérification que les informations transférées ne sont pas altérées sur la base des sommes de vérification transférées ou similaire, vérification à l'intérieur du récepteur de diffusion audio numérique du consommateur d'informations prédéterminé ou par le consommateur d'informations prédéterminé ;
- demande par le récepteur de diffusion audio numérique du consommateur d'informations prédéterminé ou par le consommateur d'informations prédéterminé au point de transfert d'informations, par l'intermédiaire du réseau de transfert bidirectionnel secondaire, d'un envoi à nouveau des informations transférées altérées.

12. Procédé destiné au transfert d'informations à partir d'un fournisseur d'informations vers un consommateur d'informations au moyen d'un système de diffusion audio numérique vers un récepteur de diffusion audio numérique du consommateur d'informations et au moyen de la prise en charge d'un réseau de transfert bidirectionnel secondaire pour rendre possible par ce moyen un transfert d'informations efficace lorsqu'une demande (310) de transfert d'informations vers le consommateur d'informations est déclenchée par le consommateur d'informations, **caractérisé en ce que** le procédé comprend les étapes suivantes :
- établissement (320) par le consommateur d'informations d'un contact initial avec un point de transfert d'informations par l'intermédiaire du réseau de transfert bidirectionnel secondaire avec une demande pour un transfert d'informations à partir du fournisseur d'informations vers le consommateur d'informations ;
- fourniture (320) par le consommateur d'informations au point de transfert d'informations, par l'intermédiaire du réseau de transfert bidirectionnel secondaire, des informations de configuration de transfert comprenant au moins une information d'identification d'émetteur d'un émetteur de diffusion audio numérique que peut recevoir le récepteur de diffusion audio numérique du consommateur d'informations ;
- extraction (330) par le point de transfert d'informations des informations demandéee ;
- transfert (360) par le fournisseur d'informations par l'intermédiaire du point de transfert d'informations, sur la base des informations de configuration de transfert, d'informations au moyen du système de diffusion audio numérique vers le récepteur de diffusion audio numérique du consommateur d'informations afin de transférer ainsi de façon efficace des informations à partir du fournisseur d'informations vers le consommateur d'informations.

13. Procédé selon la revendication 12, **caractérisé en ce que**, sur la base des informations de configuration de transfert, le point de transfert d'informations peut transférer les informations au récepteur de diffusion audio numérique du consommateur d'informations sur un émetteur sélectionné ou des émetteurs à l'intérieur du système de diffusion audio numérique.

14. Procédé selon l'une quelconque des revendications 12 et 13, **caractérisé en ce que** les informations de configuration de transfert comprennent également de plus au moins l'un parmi soit : des informations d'identification d'émetteur de tous les émetteurs pouvant être reçus par le récepteur de diffusion audio numérique du consommateur d'informations prédéterminé, les forces de champ de tous les émetteurs pouvant être reçus, quel programme éventuel l'émetteur de diffusion audio numérique est en cours de réception par le consommateur d'informations prédéterminé, ou des routes de transfert d'informations de remplacement.

15. Procédé selon l'une quelconque des revendications 12 à 14, **caractérisé en ce que** le point de transfert d'informations détermine, sur la base des informations de configuration de transfert, quand et avec quel canal le transfert d'informations doit avoir lieu et envoie une notification au moyen du réseau de transfert bidirectionnel secondaire au consommateur d'informations prédéterminé au sujet de quand et grâce à quel canal le transfert d'informations doit avoir lieu.

16. Procédé selon l'une quelconque des revendications 12 à 15, **caractérisé en ce que** le point de transfert d'informations confirme au consommateur d'informations la disponibilité ou la non-disponibilité des informations demandées par l'intermédiaire du réseau de transfert bidirectionnel secondaire ou par l'intermédiaire du système de diffusion audio numérique.

17. Procédé selon l'une quelconque des revendications 12 à 16, **caractérisé en ce que** le procédé comprend de plus les étapes suivantes :
- transfert par le point de transfert d'informations d'une clé de cryptage au consommateur d'informations au moyen du réseau de transfert bidirectionnel secondaire avant, pendant ou après le transfert d'informations sur le système de diffusion audio numérique ;
- codage des informations devant être transférées soit par le fournisseur d'informations soit par le point de transfert d'informations ;
- décodage au moyen de la clé de cryptage transférée des informations transférées soit à l'intérieur du récepteur de diffusion audio numérique du consommateur d'informations soit par le consommateur d'informations.

18. Procédé selon l'une quelconque des revendications 12 à 17, **caractérisé en ce que** le procédé comprend de plus les étapes suivantes :
- transfert de sommes de contrôle ou similaire des informations qui ont été ou qui vont être transférées par l'intermédiaire du système de diffusion audio numérique, par l'intermédiaire du réseau de transfert bidirectionnel secondaire vers le consommateur d'informations ;
- vérification que les informations transférées ne sont pas altérées, sur la base des sommes de vérification transférées ou similaire, vérification à l'intérieur du récepteur de diffusion audio numérique du consommateur d'informations ou par le consommateur d'informations ;
- demande par le récepteur de diffusion audio numérique du consommateur d'informations ou par le consommateur d'informations au point de transfert d'informations, par l'intermédiaire du réseau de transfert bidirectionnel secondaire, d'un envoi à nouveau des informations transférées altérées.
